(19) Europäisches Patentamt
European Patent Office
Office européen des brevets

(11) Publication number: **0 209 183**
**A2**

(12) **EUROPEAN PATENT APPLICATION**

(21) Application number: 86201184.8

(51) Int. Cl.⁴: C08F 297/02

(22) Date of filing: 07.07.86

(30) Priority: 10.07.85 IT 2151085

(43) Date of publication of application:
21.01.87 Bulletin 87/04

(84) Designated Contracting States:
AT BE CH DE FR GB LI LU NL SE

(71) Applicant: ENIRICERCHE S.p.A.
Corso Venezia 16
I-20121 Milan(IT)

(72) Inventor: Roggero, Arnaldo
Via Libertà 72
I- San Donato Milanese Milan(IT)
Inventor: Gandini, Alberto
Via Bottesini 9
I-20131 Milan(IT)

(74) Representative: Roggero, Sergio et al
Ing. Barzanò & Zanardo Milano S.p.A. Via
Borgonuovo 10
I-20121 Milano(IT)

(54) **Hydrogenated block copolymers and process for the synthesis thereof.**

(57) Linear and/or radial block copolymers, having high-transient hard phase and saturated soft phase, and displaying at the same time high operating temperature and excellent thermo-oxidative and photo-oxidative stability are synthetized.

EP 0 209 183 A2

# HYDROGENATED BLOCK COPOLYMERS AND PROCESS FOR THE SYNTHESIS THEREOF

The block copolymers of type AB-$(BA)_{1-10}$, wherein A is a hard phase, and B a soft base, have become of considerable interest because of their valuable properties: in fact, at room temperature, they have characteristics of elasticity close to those of vulcanized rubbers, but can be fabricated by the techniques typical for the fabrication of thermoplastic materials, the step of vulcanization being eliminated. Their networks are in fact thermoreversible, and the stability of such networks depends on the nature of the hard phase used, and more particularly on the glass transition temperature (for the glass phases), or on the melting temperature (for the crystalline phases) of the phases used.

In the case of block copolymers of traditional type, on the basis of styrene, the stability of the networks (is conditioned by the low value of $T_g$ of polystyrene (~100°C) and hence, if improved performances are desired, selecting hard phases having $T_g$ higher than polystyrene is important.

Poly-α-methylstyrene, which has a $T_g$ of ~180°C is suitable to the purpose, as well as so are also other monomers which give rise to still more high-transient hard phases (e.g., isopropenylnaphthalene).

In polymeric materials, a characteristic of considerable importance is the resistance to oxidation, and the presence in these block copolymers of unsaturated phases of dienic type limits their stability to a noticeable extent. If improving this property is desired, hydrogenating the unsaturated moiety, but without losing the elastic properties typical of the soft phase, is hence important. To that purpose, having a dienic soft phase with a well precise molecular architecture is necessary: dienic structures with high 1-4 content shall yield, on hydrogenation, rigid products (of polyethylene type); whilst when the interchaining is rich in 1-2 structure, after the hydrogenation products are obtained (of polybutene type), which do not display properties satisfactory from the technological viewpoint.

It is important as well that the dienic soft phase be not contaminated by the presence of hard phase ("pure" and not "tapered" structure), to the purpose of achieving a satisfactory separation between the phases, and consequently, improved technological properties.

The purpose of the present invention is obtaining block copolymers of "pure" type, containing a hard phase on the basis of α-methylstyrene and/or similar monomers, yielding high-transient phases; and a soft phase of dienic type (butadiene, isoprene), which can be hydrogenated to yield thermoelastomers which display at the same time, relatively to the traditional styrene-based thermoelastomers, both high operating temperature - (because of the presence of the high-transient hard phase) and excellent resistance to oxidation (thanks to the presence of a saturated elastomeric soft phase). This soft phase has been synthetized under such operating conditions, in order not to pollute such a phase by the presence of even very small aliquots of hard phase.

From patent literature, some examples are known of block copolymers on the basis of α-methylstyrene, but none of them is pertinent to the purpose we intended to achieve. In fact, U.S. patent 4,246,372 to Phillips dis closes products wherein the dienic soft phase is polluted by the presence of hard phase (α-methylstyrene) and the products obtained have not been hydrogenated; U.S. patent 3,825,623 to Polysar discloses products which are not hydrogenated, and the properties of which, as regards the oxidation, are consequently poor.

U.K. patent 1,302,111 to Shell relates to block copolymers A-B-$(B-A)_{1-10}$, wherein both the block A and the block B are partially hydrogenated; in block A (hard phase) a hydrogenation of 10-40% of the original unsaturations, and in block B (soft phase) a hydrogenation of at least 85% of the original unsaturations is provided.

Moreover, we have a "soft tapered phase" (i.e. impure due to α -methylstyrene or its derivatives), rather than a "soft pure phase", dur to the particular process whereby the nonhydrogenated A-B-$(B-A)_{1-10}$copolymer is synthetized.

The end product shows different properties, such as, e.g., poor elastic properties, and reduced "rubbery plateau", which make it suitable to uses different from those our product is intended for.

An object of the present invention are hence block copolymers A-B-$(A-B)_{1-10}$, wherein block A is not hydrogenated, and in block B a hydrogenation of at least 90% of the original unsaturations is provided.

In the block copolymers of the present invention:

A = aromatic polyvinyl and/or polyisopropenyl sequence (styrene excluded);

B = polydienic and/or hydrogenated sequence.

Sequences of Type A:

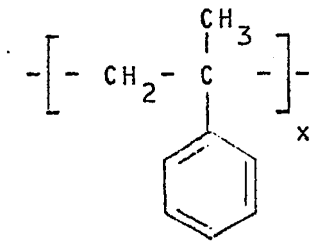

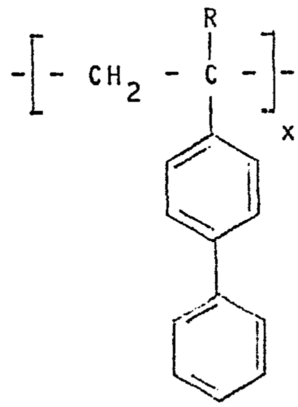

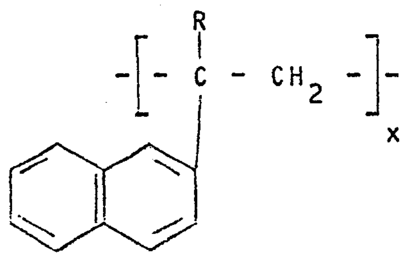

(with R = H, $CH_3$; $60 \leq X \leq 250$)

and their different possible isomers.

Sequences of Type B:

$$-[-(CH_2-CH=CH-CH_2-)_x-\ (CH_2-\underset{\underset{CH_2}{|}}{\underset{CH}{|}}{CH}-)_y-]_n$$

($350 \leq n \leq 750$)

wherein $\underline{x}$ and $\underline{y}$ are the butadienic units having different structure, randomly distributed along the chain, and the value of $\underline{x}$ varies within the range of from 20 to 75% by mol (and preferably of from 45 to 55), the balance to 100 being $\underline{y}$;

$$-(-CH_2-\overset{\overset{CH_3}{|}}{C}=CH-CH_2-)_n$$

($700 \leq n \leq 750$).

A second object of the present invention is a multistep process for the synthesis of the block copolymers described above, such steps being exemplifiable as follows:

1st step: polymerization in the absence, or substantial absence, of diluents or solvents of α-methylstyrene, and/or similar monomers;

2nd step: transformation of the α-methylstyrenic, and/or similar, carbanion, into a dienic carbanion, by the reaction of the same with small amounts of diene monomer;

3rd step: formation of α-methylstyrene-diene, and/or similar, diblock, by polymerizing, in solution, the residual aliquot of diene;

4th step: coupling reaction;

5th step: hydrogenation.

A detailed disclosure of the process provides in the first step the polymerization in bulk, and/or in concentrated solutions, of α-methylstyrene, and/or similar monomers.

α-MS is the preferred monomer, because of its availability and low cost; however, other similar monomers can be used, such as: α-methyl-4-butylstyrene, α-methyl-3,5-di-tert.butylstyrene, α-methyl-4-phenyl-styrene, α-methyl-4-cyclohexylstyrene, isopropenylnaphthalene, and so forth. The polymerization of α-methylstyrene and/or similar monomers is carried out in the absence, or substantial absence, of diluents or solvents (in case in which a monomer solid at room temperature, such as, e.g., isopropenylnaphthalene, is polymerized, the same is dissolved in an amount of solvent as small as possible, such a solvent being selected among aromatic, aliphatic and cycloaliphatic hydrocarbons, such as, e.g., toluene, either alone or in mixture). The polymerization in the absence or substantial absence of diluents or solvents of α-methylstyrene and/or similar monomers is carried out with or without the presence of polar activators, at a temperature comprised within the range of from -80 to +80°C, but preferably comprised within the range of from +10 to +30°C when the process is carried out in the absence of diluent or solvent, and of from -50 to 50°C when the process is carried out in the presence of a diluent or solvent. The polar activator used must be not contraindicated for the good performance of the subsequent steps, and in particular, it must not favour the randomization of the excess of α-methylstyrene (as it shall be more clearly evidenced in the disclosure of the 3rd step): due to this reason, K-tert.butoxide, or other activators of this type cannot be used. As a function of the polymerization time adopted, the conversion of α-methylstyrene, and hence the molecular weight can be controlled as desired, but (under experimental conditions of practical interest) the total conversion is not reached, some α-methylstyrene remaining hence in the not-polymerized state. The molecular weight can be furthermore regulated by adopting a suitable monomer-to-initiator ratio. The initiators used are typical initiators of the anionic polymerization: monolithium-derivatives of formula RLi are preferably used, wherein R is an aliphatic, cycloalifatic and aromatic hydrocarbon radical; more frequently, aliphatic monolithium-derivatives are used.

Typical examples are: Li-n.butyl, Li-sec.butyl, Li-n.decyl, Li-phenyl and Li-cyclohexyl.

In the second step, a small amount of diene is added in bulk to the poly-α-methylstyrenic carbanion, said amount being such that the ratio of diene to the anionic polymerization initiator be ≥10: the reaction is very rapid, and within a short time, the complete transformation occurs into the dienic carbanion. This prevents the depolymerization of the poly-α-methylstyrene chain which, as known, has a very low value of ceiling temperature, and makes it possible to subsequently operate at higher temperatures and at greater dilutions in the subsequent step, wherein the dienic component is polymerized.

In the third step, the polymerization of the diene is carried out under very controlled conditions, so to obtain the desired 1-2 microstructure (this, because the polymer must be subsequently hydrogenated), but without the α-methylstyrene monomer still present as residue from the first step being assembled into the dienic phase. So, the amount of solvent sufficient to lower the viscosity of the solution is added, up to obtain a solution at 8% by weight, such a solution being hence suitable to be properly stirred. Suitable solvents comprise aliphatic, cycloaliphatic and aromatic hydrocarbons generally used for this particular type of polmerization, either alone, or mixed with each other. Cyclohexane is the preferred solvent.

Besides the solvent, into the reaction medium such suitable activator compounds are injected, if they have not been already added in the first step, so to accomplish the desired microstructure of the dienic phase, but without allowing the residual α-methylstyrene in the dienic phase to randomize. To that purpose, the use of tetrahydrofuran (THF) or of activator agents having the same capabilites has resulted satisfactory: by varying the concentration of THF, varying as desired the dienic structure has been possible; Controlling the amount of 1,2-microstructure has resulted possible also by varying the polymerization temperature.

Besides THF, dioxane, diethyleneglycoldimethylether, tetramethylenediamine have been successfully used, but THF has resulted to be the preferred activator.

The amount of activator agent used has been varied within the range of from 150 ppm to 2000 ppm.

The polymerization has been carried out at temperatures comprised within the range of from +20 to +120°C, but preferably of from 60 to 80°C

The conjugated dienes used are those containing from 4 to 12 carbon atoms, of type: 1,3-butadiene and isoprene (the preferred ones), but also 1,3-pentadiene (piperylene), 2,3-dimethyl-1,3-butadiene, 2-methyl-1,3-pentadiene, 2,3-dimethyl-1,3-pentadiene, 2-methyl-3-ethyl,3-pentadiene, 2-phenyl-1,3-butadiene, and so forth, either alone or mixed with each other, can be used.

In the fourth step, the living polymeric carbanions have been terminated by coupling agents, to yield products of type AB-(BA) $_{1\text{-}10}$, as a function of the functionality of the coupling agent used.

To that purpose, a wide range of products can be used, but the most suitable have resulted the compounds of type: 2,6-distyrylpyridine, diphenyldichlorosilane, tristyrylpyridine, methyltrichlorosilane, silicon tetrachloride.

The reaction has been carried out by adding the above-listed agents in the suitable stoichiometric ratio (see the functionality) to accomplish the linear and/or stellar product desired.

The reaction has been generally carried out at the same temperature at which the polymerization has been carried out, for times comprised within the range of from a few minutes to one hour, as a function of the type of agent used, and of the experimental conditions adopted, according to a methodology known.

The hydrogenation of the so obtained products has been carried out in a pressurized reactor, by adding to the polymeric solution to be hydrogenated the catalyst and the co-catalyst in the optimum ratio, and by operating under the suitable hydrogen pressure. As the catalyst, such derivatives of cobalt, nickel, etc., as alkoxides, naphthenates, and so forth, have been used; preferably, cobalt 2-ethylhexanoate as been used. As the co-catalyst, lithium-alkyls, aluminum-alkyls, polyiminohalanes, and so forth, have been used; preferably, lithium-alkyls have been used, operating with a Li-Co ratio of ≃3.

The pressure under which this step has been carried out varied within the range of from 1 atmosphere to 50 atmospheres, and the temperature was comprised wihin the range of 20-25°C to 180°C; preferably, the operating conditions have been: temperature of 100-140°C and pres-sure of 12-20 atm.

Within times of a few hours, a high hydrogenation efficiency has been obtained.

The materials so obtained have been evaluated by comparison to the not-hydrogenated products.

Viscoelastic measurements in the solid state have been carried out by the Rheovibron, at the frequency of 110 Hz, tensile measurements have been carried out according to DIN 53504 Standard, and, above all, measurements of thermo-oxidative ageing in oven with forced air circulation and ageing tests in Weather-O-Meter with full-light cycle, and temperature of the black screen of 65°C have been carried out.

The data obtained evidences the presence of wide and weel-defined rubbery plateaux, optimum elastic response which confirms the "pure" nature of the dienic soft block and, above all, very good resistance to thermo-and photo-oxidative ageing which, by combining with the high operating temperature allowed by the presence of the high-transient hard phase, renders these materials particularly attractive.

The following Examples have the purpose of illustrating the invention more specifically, without limiting it.

Example 1

Into a glass reactor of ~1 litre of capacity, with perfectly tight sealing with stainless head, equipped with stirrer, way for reactants inlet, way for nitrogen inlet, and temperature and pressure measuring gauges, after complete deaerating, 50 ml (~45 g) of α-methylstyrene (α-MS) and 1.28 mmol of Li-sec.butyl are introduced, allowing the polymerization to proceed at room temperature for ~60 minutes. Thereafter, 0.6 ml (0.58 g) of THF,and 5 g of butadiene are injected and allowed to react for 5 minuted, always at room temperature. The red colour of α-methylstyrenic carbanion disappears nearly instantaneously, and a straw-yellow colour develops. At this point, the reaction mass is diluted with 400 ml of cyclohexane, and all the residual butadiene (28,7 g) is introduced, and made polymerize over ~1 hour at 60°C.

A small sample of polymer is drawn and sent to G.P.C. analysis.

Finally, 0.6 mmol of 2,6-distyrylpyridine is introduced, allowing the coupling reaction to occur at 80°C for 15 minutes.

The coupling yield is greater than 95%.

The product of AB-BA type (50.7 g), the composition and data relating to the molecular weight of which, together with those of corresponding AB product are reported in Table 1, is separated under high vacuum from monomer α-methylstyrene - (which shall be recycled) and, again redissolved in cyclohexane, is sent to the subsequent hydrogenation step.

Per each 100 meq of double bonds, 0.4 mmol of cobalt-2-etnylhexanoate and Li-sec.butyl (Li/Co = 2.8) is added, and the reaction is carried out at 100°C for 5 hours under a hydrogen pressure of ~20 atm. Under these conditions, the hydrogenation is nearly complete (<5% of residual unsaturations).

The polymeric solution is purified by washing with $H_2O$-acid, ionol is added as antioxidizer, and the solvent is removed by steam-distillation, the copolymer being finally dried under high vacuum, at 80°C for ~15 hours.

The stress-strain curve of this product (Fig.1, wherein on the abscissae the % strain and on the ordinates the stress as MPA is reported) shows the high strengthening effect at high strains, typical of the block copolymers of AB-BA type.

Furthermore, the high strains witness to the good elastic character of the soft phase, which has been built in "pure" way.

It has been demonstrated indeed in a test experience that under the experimental conditions we adopted in this Example, practically no insertion of α-methylstyrenic units in the dienic chain occurs ($^1$H-N.M.R. examination).

The dynamic-mechanical spectrum (Fig. 2, wherein at fig. 2-a on the abscissae the temperature as °C, and on the ordinates the tan δ, adimensional, is reported; and at fig. 2-b, on the abscissae the temperature as °C and on the ordinates the E'as MPA's is reported), evidences the well-defined "rubbery plateau", which extends up to high temperatures (above 150°C) and, around -35°C, an absorption peak of the saturated elastomeric phase (ethylene-butene copolymer).

D.S.C. curve is in compliance with the performance expected on the basis of the data of composition of the dienic phase (vinyl content) before the hydrogenation.

The transitions of the hydrogenated soft phase at ~-59°C (the lower value than observed on Rheovibron is correct, because the two methodologies are different) and minor transitions of the polyethylene phase around 0°C are clearly individuated, whilst the transition due to the poly-α-methylstyrene-based hard phase, occurring around 170°C is not much evidenced.

The measurements of thermo-oxidative ageing and the ageing tests on Weather-O-Meter have shown the considerable stability of the hydrogenated relatively to the not-hydrogenated product. In fact, whilst in the first case the ultimate tensile strength and the ultimate elongation remain practically unchanged, in the second case a consi derable reduction in ultimate elongation and an extreme reduction in ultimate tensile strength can even be observed.

TABLE 1

| Sample | α-MS[b] % by weight | | Butadiene % by weight | | $\overline{PM}^{(c)} \cdot 10^{-3}$ | Transitions, °C | | |
|---|---|---|---|---|---|---|---|---|
| | Bound[a] | Quenched[a] | 1-2[b] | 1-4[b] | g/mol | Butadiene | $C_2C_4$ | α-MS |
| AB | 30 | 5 ($\overline{PM}=22.10^3$)[c] | 30 | 35 | 72.0 | -60 | = | +170 |
| ABBA | 30 | 5 ($\overline{PM}=23.10^3$)[c] | 30 | 35 | 136.0 | -60 | = | +170 |
| Hydrogenated ABBA | 30 | 5 | (Residual unsaturations = 3.5% of total unsaturations) | | n.d. | = | 0 -59 | +170 |

NOTES: (a) From G.P.C. Data

(b) From Proton N.M.R. Data

(c) The molecular weight corresponding to the elution volume taken at peak value.

Example 2

The test is carried out as described in the preceding Example, with the only difference that α-methylstyrene is polymerized for 50 minutes, and in the subsequent polymerization of butadiene, a lower amount of THF (0.43 g) is charged, to the purpose of achieving a polymer with lower vinyl structure.

Product shaving the composition and molecular weights as reported in Table 2 are isolated.

T A B L E 2

| Sample | α-MS % by weight Bound | α-MS % by weight Quenched | Butadiene % by weight 1-2 | Butadiene % by weight 1-4 | $\overline{\overline{PM}}.10^{-3}$ g/mol | Transitions, °C Butadiene | Transitions, °C $C_2C_4$ | Transitions, °C α-MS |
|---|---|---|---|---|---|---|---|---|
| AB | 20.4 | 4.6 ($\overline{\overline{PM}}=11.10^3$) | 27 | 48 | 50.7 | -70 | = | ∿+160 |
| ABBA | 20.4 | 4.6 ($\overline{\overline{PM}}=11.10^3$) | 27 | 48 | 102.0 | -70 | = | ∿+160 |
| Hydrogenated ABBA | 20.4 | 3.6 | (Residual unsaturations = less than 5%) | | -- | = | -59<br>0<br>+45 | ∿+160 |

NOTES: See Table 1.

The tensile data referring to the hydrogenated product evidences a strengthening action slightly lower than that of preceding sample, due to the lower content of hard phase, and an extremely good elastic response.

The data on Rheovibron evidence a well defined rubbery plateau, whilst on D.S.C. examination, transitions to be attributed to the greater amount of polyethylene units are observed.

Example 3

The test is carried out as disclosed in Example 2, but with the difference that the amount of Li-sec.butyl is of 1.0 mmol, and that instead of THF, TMEDA (2 mmol = 0.24 g) is used.

The products having the composition and molecular weight characteristics as reported in Table 3 are isolated.

TABLE 3

| Sample | α-MS % by weight: Bound | α-MS % by weight: Quenched | Butadiene % by weight: 1-2 | Butadiene % by weight: 1-4 | $\overline{PM}.10^{-3}$ g/mol | Transitions, °C: Butadiene | Transitions, °C: $C_2C_4$ | Transitions, °C: α-MS |
|---|---|---|---|---|---|---|---|---|
| AB | 20 | 3.8 ($\overline{PM}=16.10^3$) | 53.1 | 23.1 | 79.0 | -34 | = | ∿+170 |
| ABBA | 20 | 3.8 ($\overline{PM}=15.10^3$) | 53.1 | 23.1 | 148.0 | -34 | = | ∿+170 |
| Hydrogenated ABBA | 20 | 3 | (Residual unsaturations = less than 5%) | | -- | = | -40 | ∿+170 |

NOTES: See Table 1.

Example 4

Example 1 is repeated with the only differences that, as the coupling agent, silicon tetrachloride in suitable stoichiometric ratio (1/4 of Li value) is used, and that in lieu of butadiene, isoprene is used, a product being obtained which shows molecular and technological properties in compliance with the expected ones.

Example 5

Example 1 is repeated with the only difference that the hydrogenation reaction is carried out by using a nickel naphthenate as the catalyst, aluminum-trialkyl as the co-catalyst, at 65°C, under a hydrogen pressure of ~20 atm.

The properties of the product obtained are at all comparable to those of product described in Example 1.

Example 6

The process is carried out in the same equipment as described in Example 1, 2-isopropenylnaphthalene (2-IPN) being polymerized in solution in tetrahydrofuran at low temperature. At the end, a small amount of butadiene is added, which transforms within a short time, and quantitatively, the dark-green carbanion of 2-IPN into straw-yellow dienic carbanion.

The temperature is then allowed to rise to room temperature, toluene is added, the excess of tetrahydrofuran being distilled off, up to perform the subsequent polymerization of butadiene to the desired values of vinylic microstructure (with subsequent hydrogenation).

The process is then continued as described, a product being obtained, the transition of the hard phase of which occurs, from D.S.C. data, at about 210°C.

The technological data evidences the very good properties as expected: well defined rubbery plateaux extended up to about 200°C, very good elastic response, excellent thermo-oxidative and photo-oxidative resistance 05978

## Claims

1. A-B-(B-A)$_{1\text{-}10}$ block copolymers, wherein

A is an aromatic polyvinyl and/or polyisopropenyl sequence, and

B is a hydrogenated polydienic sequence,

characterized in that the sequence A is not hydrogenated, and the sequence B shows a hydrogenation of at least 90% of the original unsaturations.

2. Block copolymers according to the preceding claim, wherein the aromatic vinyl and/or isopropenyl compound of A sequence is selected from α-methylstyrene, vinylbiphenyl, isopropenylbiphenyl, vinylnaphthalene, isopropenylnaphthalene.

3. Block copolymers according to claim 1, wherein the compound of B sequence is selected from 1,3-butadiene, isoprene, 2,3-dimethyl-1,3-butadiene, 1,3-pentadiene (piperylene), 2-methyl-3-ethyl-1,3-butadiene, 3-methyl-1,3-pentadiene, 1,3-hexadiene, 2-methyl-1,3-hexadiene, 3-butyl-1,3-octadiene.

4. Process for the preparation of copolymers according to claim 1, comprising the following steps:

1st Step: polymerization in the absence, or substantial absence, of diluents or solvents of α-methylstyrene, and/or similar monomers;

2nd Step: transformation of the α-methylstyrenic, and/or similar, carbanion, into a dienic carbanion, by the reaction of the same with small amounts of diene monomer;

3rd Step: formation of α-methylstyrene-diene, and or similar, diblock, by polymerizing, in solution, the residual aliquot of dienes;

4th step: coupling reaction;

5th step: hydrogenation.

5. Process according to the preceding claim, characterized in that in the first step the polymerization is carried out at a temperature comprised within the range of from -80°C to +80°C

6. Process according to the preceding claim, characterized in that in the first step the polymerization is carried out at a temperature preferably comprised within the range of from +10°C to +30°C, when it is carried out in the absence of diluent or solvent.

7. Process according to claim 5, characterized in that in the first step the polymerization is carried out at a temperature preferably comprised within the range of from -50°C to +50°C, when it is carried out in the presence of diluent or solvent.

8. Process according to claim 4, characterized in that in the first step the polymerization is carried out in the presence of a polar activator.

9. Process according to the preceding claim, characterized in that the polar activator is preferably selected from tetrahydrofuran, dioxane, diethyleneglycol-dimethylether, tetramethylenediamine.

10. Process according to claim 8, characterized in that the polar activator is in an amount comprised within the range of from 150 ppm to 2000 ppm.

11. Process according to claim 4, characterized in that in the second step the transformation is carried out with a diene monomer/polymerization anionic initiator molar ratio ≥10.

12. Process according to claim 4, characterized in that in the third step the process is carried out in the presence of a solvent selected from aliphatic, cycloaliphatic and aromatic hydrocarbons, either alone or mixed with each other.

13. Process according to the preceding claim, characterized in that the solvent is preferably cyclohexane.

14. Process according to claim 4, characterized in that in the third step the process is carried out in the presence of a polar activator.

15. Process according to the preceding claim, characterized in that the polar activator is preferably selected among tetrahydrofuran, dioxane, diethyleneglycoldimethylether, tetramethylenediamine.

16. Process according to claim 14, characterized in that the polar activator is in an amount comprised within the range of from 150 ppm to 2000 ppm.

17. Process according to claim 4, characterized in that in the third step the process is carried out at temperatures comprised within the range of from +20 to +120°C

18.Process according to the preceding claim, characterized in that the process is preferably carried out at temperatures comprised within the range of from 60 to 80°C.

19. Process according to claim 4, characterized in that in the fourth step the coupling agent is preferably selected among 2,6-distyrylpyridine, diphenyldichlorosilane, tristirylpyridine, methyltrichlorosilane, silicon tetrachloride.

20. Process according to claim 4, characterized in that in the fifth step the catalyst is selected among derivatives of cobalt and nickel.

21. Process according to the preceding claim, characterized in that the catalyst is preferably selected among cobalt or nickel alkoxides or naphthenates.

22. Process according to claim 4, characterized in that in the fifth step the co-catalyst is selected among lithium-alkyls, aluminum-alkyls, polyiminohalanes.

23. Process according to claim 4, characterized in that in the fifth step the process is carried out at temperatures comprised between, or equal to, 20-25°C and 180°C.

24. Process according to the preceding claim, characterized in that the process is preferably carried out at temperatures comprised between, or equal to, 100°C and 140°C.

25. Process according to claim 4, characterized in that in the fifth step the process is carried out under pressures comprised between, or equal to, 1 and 50 atm.

26. Process according to the preceding claim, characterized in that the process is preferably carried out under pressures comprised between, or equal to, 12 and 20 atm.

Fig.1

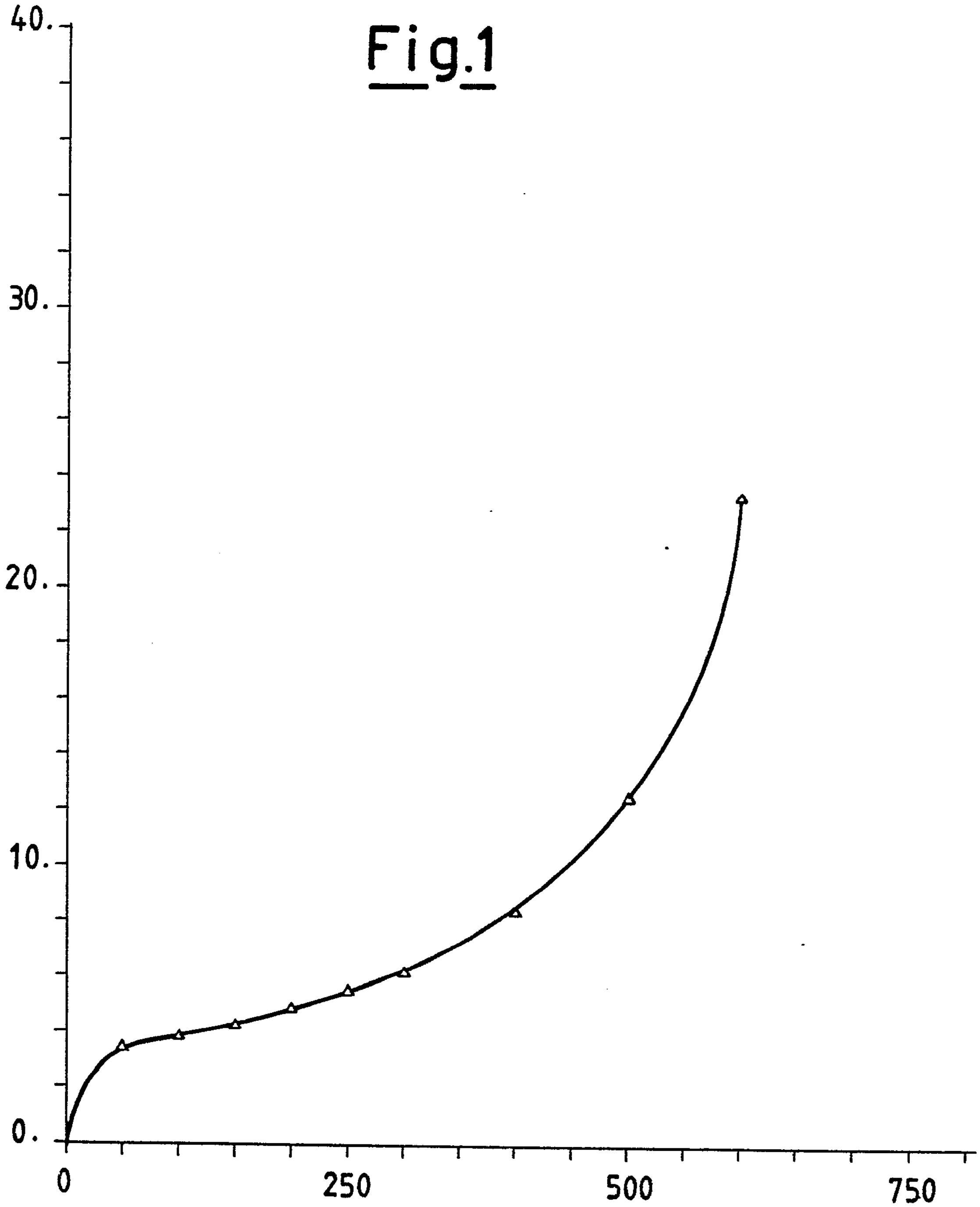

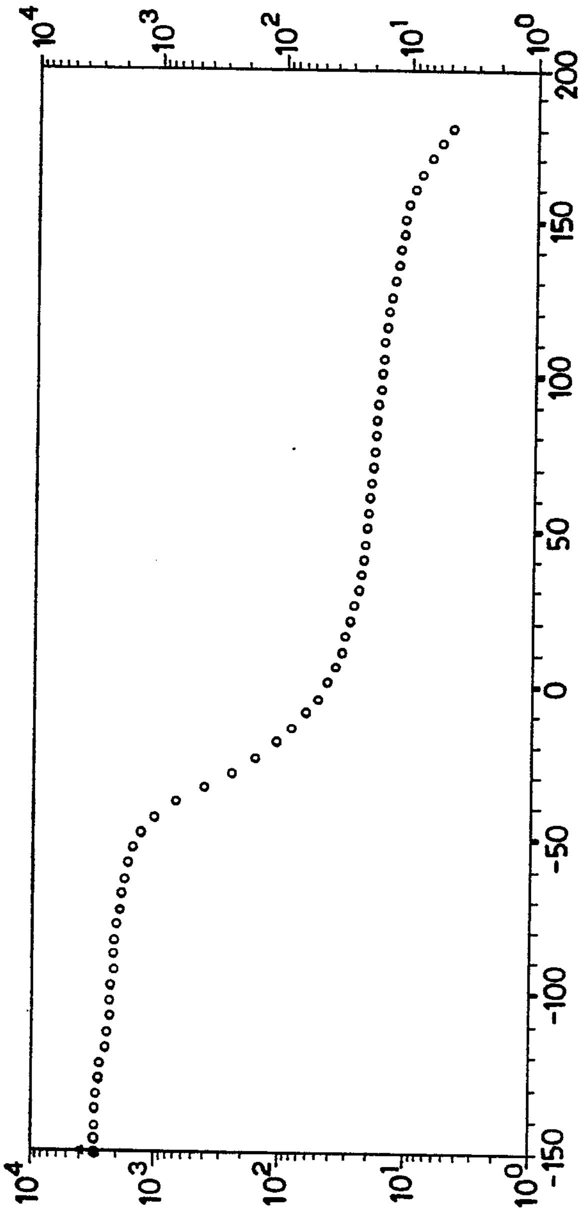

$10^4$
$10^3$
$10^2$
$10^1$
$10^0$
-150
-100
-50
0
50
100
150
200


Fig.2b

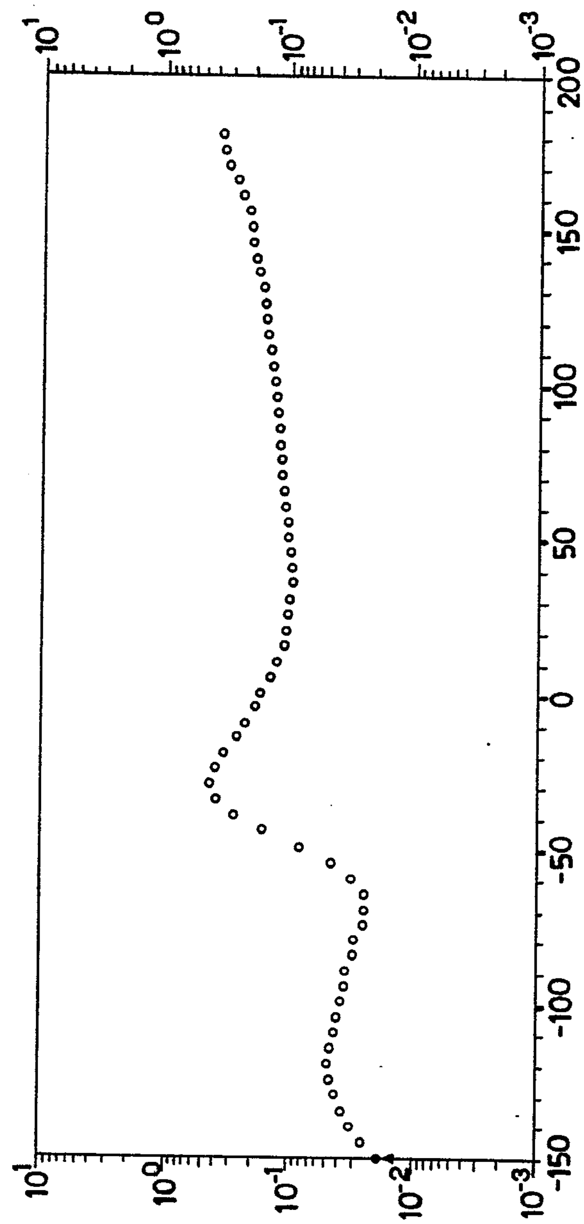

$10^1$
$10^0$
$10^{-1}$
$10^{-2}$
$10^{-3}$
-150
-100
-50
0
50
100
150
200


Fig.2a